## Europäisches Patentamt
## European Patent Office
## Office européen des brevets

(11) Veröffentlichungsnummer: **0 204 687 B1**

(12) **EUROPÄISCHE PATENTSCHRIFT**

(45) Veröffentlichungstag der Patentschrift:
12.09.90

(51) Int. Cl.⁵: **F02B 25/04**, F02F 1/22

(21) Anmeldenummer: **86890127.3**

(22) Anmeldetag: **06.05.86**

(54) Zweitakt-Brennkraftmaschine.

(30) Priorität: **07.06.85 AT 1720/85**

(43) Veröffentlichungstag der Anmeldung:
**10.12.86 Patentblatt 86/50**

(45) Bekanntmachung des Hinweises auf die Patenterteilung:
**12.09.90 Patentblatt 90/37**

(84) Benannte Vertragsstaaten:
**CH DE FR GB IT LI SE**

(56) Entgegenhaltungen:
**DE-A- 2 909 591**
**DE-C- 526 659**
**DE-C- 2 844 308**
**US-A- 2 137 344**

(73) Patentinhaber: **AVL Gesellschaft für Verbrennungskraftmaschinen und Messtechnik mbH.Prof.Dr.Dr.h.c. Hans List, Kleiststrasse 48, A-8020 Graz(AT)**

(72) Erfinder: **Plohberger, Diethard, Dipl.-Ing., Kossgasse 10, A-8010 Graz(AT)**
Erfinder: **Greier, Josef, Dipl.-Ing., Heinrichstrasse 112 d, A-8010 Graz(AT)**
Erfinder: **Fachbach, Heinz, Dipl.-Ing. Dr., Am Blumenhang 17, A-8010 Graz(AT)**

(74) Vertreter: **Krause, Walter, Dr. Dipl.-Ing. et al, Postfach 200 Singerstrasse 8, A-1010 Wien(AT)**

## Beschreibung

Die Erfindung bezieht sich auf eine Zweitakt-Brennkraftmaschine mit Gleichstromspülung, mit mindestens einer Zylindereinheit mit vom Kolben gesteuerten, am Zylinderumfang verteilten, einen Grunddrall erzeugenden Einlaßschlitzen, welche von einem den Zylinder umgebenden Frischladungsraum ausgehen, der über mindestens einen Zuführkanal mit der Spülpumpe verbunden ist, wobei eine zwei Teilströme bildende Steuereinrichtung vorgesehen ist, welche sich im zylinderseitigen Ende zumindest eines Zuführkanales befindet und den Drall des durch die Einlaßschlitze in den Zylinder eintretenden Frischladungsstromes abhängig von der Drehzahl und Last der Brennkraftmaschine beeinflußt.

Eine derartige Brennkraftmaschine ist beispielsweise aus der DE-OS 2 909 591 bekannt geworden. Die Brennkraftmaschine weist zumindest eine Zweitakt-Arbeitszylinder-Kolben-Baugruppe auf, in welcher zwei horizontal einander gegenüberliegende Arbeitskolben angeordnet sind, wobei eine Spülvorrichtung vorgesehen ist, die das aus den Spülschlitzen eingeblasene Spülgemisch mit verschiedenen Intensitäten verwirbeln kann. Es sind dazu zwei Gruppen von in Richtung der Zylinderachse übereinander angeordneten Spülschlitzen notwendig, wobei die beiden Gruppen von Spülschlitzen durch eine Ebene getrennt sind und von separaten Frischladungsräumen mit Frischladung versorgt werden. Die erste Gruppe der Spülschlitze ermöglicht eine radiale, die zweite eine tangentiale Einströmung der Frischladung. Durch ein Steuerorgan in der Zuleitung zur ersten Gruppe, mit welchem diese Leitung gedrosselt werden kann, wird die Frischladung auf die beiden Gruppen von Spülschlitzen unterschiedlich verteilt, wodurch ein unterschiedlicher Drall der Frischladung im Zylinder bewirkt wird. Nachteilig bei dieser Ausführung ist der komplizierte Aufbau, welcher zwei Gruppen von Spülkanälen und zwei Frischladungsräume benötigt.

Weiters ist in der DE-PS 526 659 eine Brennkraftmaschine beschrieben, bei welcher die Kernzone und die Wandzone des Zylinders nacheinander gespült werden. Dabei müssen die Zylinderbüchsen möglichst dünnwandig sein, um eine Leitwirkung der Schlitze zu vermeiden. Ferner ist bei der bekannten Ausführung um die Spülschlitze ein Leitapparat angeordnet, welcher den Drall des Frischladungsstromes erzeugt. Dieser Drall-Leitapparat ist in einem besonderen Luftraum untergebracht, der jeden Zylinder umgibt. Der von jedem Zylinder benötigte Raum ist daher relativ groß, wodurch auch der Abstand der einzelnen Zylinder erheblich ist. Der Motor wird dadurch zwangsläufig länger und schwerer.

Die Erfindung stellt sich die Aufgabe, die Nachteile der bekannten Ausführung zu beseitigen und eine Brennkraftmaschine gedrängter Bauart zu schaffen, bei der die Zylinderbüchsen relativ dickwandig sind und bei der durch die Leitwirkung der Schlitze eine gleichzeitige Spülung der Wandzone und der Kernzone des Zylinders herbeigeführt wird.

Ausgehend von einer Zweitakt-Brennkraftmaschine der eingangs angeführten Art wird diese Aufgabe erfindungsgemäß dadurch gelöst, daß die beiden Teilströme im Querschnitt gesehen in Bezug auf den Zylinder in tangential entgegengesetzten Richtungen in den gemeinsamen Frischladungsraum münden, derart daß die Frischladung in dem den Zylinder umgebenden Frischladungsraum einen über die Steuereinrichtung steuerbaren Vordrall aufweist. Dabei dient die durch die Schlitze herbeigeführte Drallströmung vor allem zur vorteilhaften Beeinflussung der Verbrennung. Dadurch wird die Leistung erheblich verbessert und der Kraftstoffverbrauch gesenkt. Da weiters die einzelnen Zylinder keine gesonderten Drall-Leitapparate besitzen, sondern an einen gemeinsamen Luftraum angeschlossen sind, kann der Abstand zwischen den einzelnen Zylindern verhältnismäßig klein sein. Es wird infolgedessen durch die erfindungsgemäße Lösung auch die Konstruktion der Brennkraftmaschine verbessert, da nur eine Art von Schlitzen und ein nicht geteilter Frischladungsraum notwendig sind.

Nach einer vorteilhaften Ausgestaltung der Erfindung ist bei Zweitakt-Brennkraftmaschinen, bei welchen die Achse des Zuführkanals die Zylinderachse zumindest annähernd schneidet, vorgesehen, daß jeder Zuführkanal in zwei, in der Ebene der Einlaßschlitze nebeneinanderliegende Teilkanäle unterteilt ist, die bei Betätigung der Steuereinrichtung unterschiedlich große freie Querschnitte aufweisen. Vorteilhaft dabei ist die konstruktiv einfache Ausbildung der Steuereinrichtung in jedem Zuführkanal jedes Zylinders, welche in gleicher Weise sowohl für Ein- als auch für Mehrzylinder-Motoren möglich ist, wobei in letzterem Fall auch ein alle Zylinder umfassender Frischladungsraum Verwendung finden kann. Die für die Erzeugung des Vordralls notwendigen unterschiedlich starken Teilströme werden durch Verdrehen oder Verschieben der Steuereinrichtung und sich ggf. dabei einstellenden unterschiedlich großen freien Querschnitten in den Teilkanälen erreicht.

Wie die DE-PS 2 844 308 zeigt, ist eine Zweitakt-Brennkraftmaschine bereits bekannt geworden, bei der die Achse des Zuführkanals die Zylinderachse zumindest annähernd schneidet. Doch hat diese Brennkraftmaschine den Nachteil, daß sie nur für einen bestimmten Last- und Drehzahlzustand optimal ausgelegt werden kann.

Gemäß einer Ausgestaltung der Erfindung kann die Steuereinrichtung eine den Zuführkanal unterteilende, feststehende parallel zur Zylinderachse angeordnete Trennwand, sowie eine steuerbare Drosselklappe in mindestens einem der durch die Trennwand gebildeten Teilkanäle aufweisen. Der maximale Vordrall der Frischladung wird durch totale Drosselung eines Teilkanals erreicht. Es ist auch möglich, in beiden Teilkanälen Drosselklappen vorzusehen, wodurch der durch die Einlaßschlitze erzeugte Grunddrall sowohl verstärkt als auch abgeschwächt werden kann.

Eine weitere Ausgestaltung der Erfindung ist dadurch gegeben, daß die Steuereinrichtung eine Umlenkklappe mit einem vorzugsweise strömungsgünstigen Querschnitt aufweist und daß diese Umlenkklappe beim Verschwenken um ihre Achse in den beiden Teilkanälen unterschiedlich große Teilströme hervorruft. Durch diese vorteilhafte Ausgestaltung ist mit einer einzigen Steuereinrichtung sowohl eine Vergrößerung als auch eine Verminderung des durch die Einlaßschlitze erzeugten Grunddralls möglich.

Besonders vorteilhaft ist es, wenn erfindungsgemäß die Steuereinrichtung einen Umlenkschieber aufweist, dessen der Strömung zugewandte Seite eine strömungsgünstige Anformung aufweist. Durch die Verwendung eines Umlenkschiebers bleibt die dem Frischladungsstrom zugewandte Staufläche des Umlenkschiebers konstant, wodurch die Teilkanäle mit unterschiedlich großen Teilströmen beaufschlagt werden können, ohne daß gleichzeitig der Gesamtstrom der Frischladung variiert.

Es ist auch möglich, den Vordrall im Frischladungsraum durch Verschwenken des zylinderseitigen Endteiles des Zuführkanals zu steuern. Der Zuführkanal muß dabei um eine Achse geschwenkt werden, wobei im Inneren des Zuführkanals dann keine weitere Steuereinrichtung notwendig ist.

Schließlich ist in einer weiteren Ausführung der Erfindung vorgesehen, daß die Achsen der mindestens zwei Zuführkanäle, welche in der Ebene der Einlaßschlitze in den Frischladungsraum einmünden, einen Normalabstand in der Größenordnung des halben Zylinderdurchmessers zur Zylinderachse aufweisen, wobei sich in mindestens einem Zuführkanal eine Drosseleinrichtung befindet, durch die unterschiedlich große Teilströme in den Zuführkanälen einstellbar sind. Diese Ausführungsvariante eignet sich vor allem für Mehrzylinder-Motoren. So ist beispielsweise bei einer Zweizylinder-Zweitakt-Brennkraftmaschine mit einem beiden Zylindern gemeinsamen Frischladungsraum und drei Zuführkanälen, welche in etwa tangential zu den Zylinderbüchsen in diesen einmünden, nur in einem Zuführkanal eine Drosseleinrichtung notwendig. Dabei kann sich die Drosseleinrichtung vorzugsweise im mittleren der drei Zuführkanäle befinden, der zwischen den beiden Zylindern in den Frischladungsraum einmündet. Bei dieser Ausführungsform ist jedoch ein gegenläufiger Grunddrall in den beiden Zylindern Voraussetzung.

Allen Ausführungsformen gemeinsam ist die zu einem Vordrall im Frischladungsraum führende Aufteilung des Frischladungsstromes in unterschiedlich große Teilströme zu beiden Seiten des Zylinders.

In der Zeichnung sind einige Ausführungsbeispiele der Erfindung dargestellt. Es zeigen:

Figur 1 einen Vertikalschnitt nach der Linie I–I in Fig. 2 durch die Zylindereinheit einer Einzylinder-Zweitakt-Brennkraftmaschine nach der Erfindung,
Figur 2 einen Schnitt nach der Linie II-II in Fig. 1, die
Figuren 3 und 4 Varianten der in Fig. 2 dargestellten Ausführungsform in gleicher Schnittführung, und die
Figuren 5 und 6 zwei Ausführungsformen von Zweizylinder-Zweitakt-Brennkraftmaschinen in einer den Fig. 2 bis 4 entsprechenden Schnittführung.

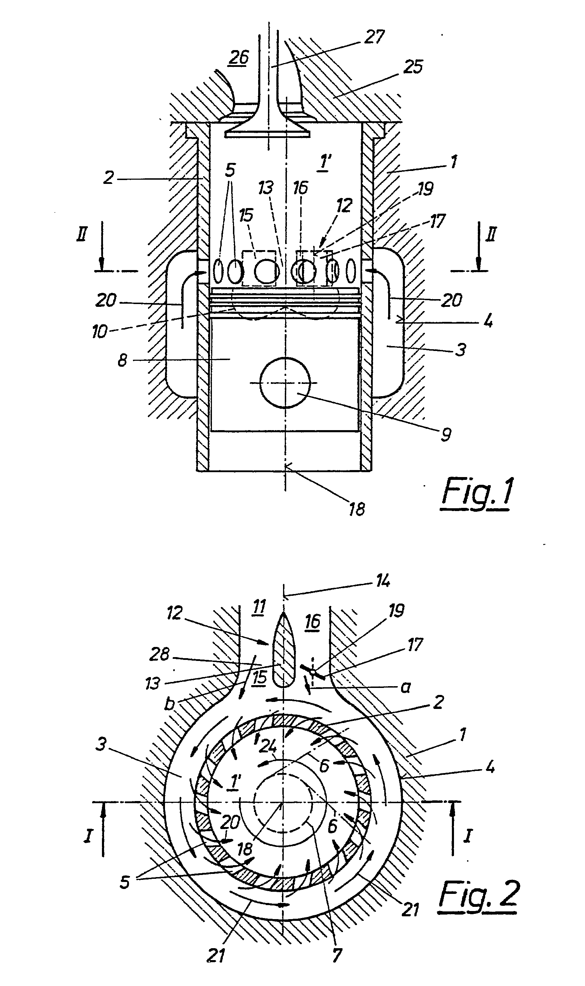

Die in den Fig. 1 und 2 dargestellte Zylindereinheit weist einen Zylinderblock 1 mit eingesetzter, den Zylinder 1' bildender Zylinderbüchse 2 auf, wobei der Frischladungsraum 3 durch eine ringförmige Ausnehmung 4 im Zylinderblock 1, sowie durch die Zylinderbüchse 2 gebildet wird. Die Zylinderbüchse 2 weist an ihrem Umfang gleichmäßig verteilte Einlaßschlitze 5 auf, deren Achsen 6 tangential auf einen strichliert dargestellten, zur Zylinderbüchse 2 axialen Zylinder 7 weisen, wodurch die längs der Pfeile 20 einströmende Frischladung mit einem Grunddrall entsprechend dem Pfeil 24 beaufschlagt wird. Die Einlaßschlitze 5 werden von einem Kolben 8, dessen Brennraummulde 10 strichliert dargestellt ist, gesteuert. Der Kolben 8 ist über den Kolbenbolzen 9 mit der nicht dargestellten Pleuelstange antriebsmäßig verbunden. Die Frischladung wird über den Zuführkanal 11 von einer nicht dargestellten Spülpumpe in den Frischladungsraum 3 eingebracht. Im Zuführkanal 11 befindet sich an seinem zylinderseitigen Ende 28 eine Steuereinrichtung 12, bestehend aus einer Trennwand 13, die den Zuführkanal 11 längs seiner die Zylinderachse 18 schneidenden Achse 14 in zwei Teilkanäle 15, 16 unterteilt, sowie aus einer Drosselklappe 17 im Teilkanal 16. Die Drosselklappe 17 ist auf ihrer parallel zur Zylinderachse 18 stehenden Achse 19 drehbar gelagert.

Bei Verdrehen der Drosselklappe 17 aus ihrer strichliert dargestellten unwirksamen Stellung in die gezeigte Drosselstellung, wird der Teilstrom a gegenüber dem Teilstrom b gedrosselt, wobei im anschließenden Frischladungsraum 3 ein durch die Pfeile 21 angedeuteter Vordrall entsteht, der in seiner Größe durch die Stellung der Drosselklappe 17, die in nicht näher dargestellter Weise von einem Stellmotor od. dgl. betätigt wird, steuerbar ist.

In dem mit 25 bezeichneten Zylinderkopf befindet sich der Auslaß 26 mit dem Auslaßventil 27. Die Zündkerze und die Einspritzdüse sind nicht dargestellt.

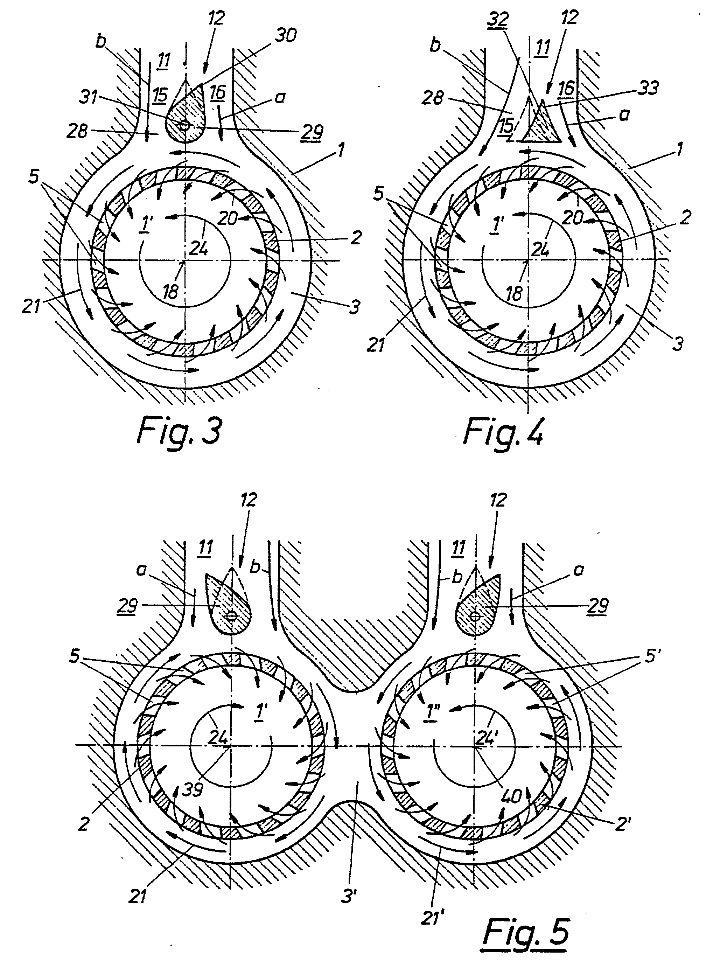

In den Fig. 3 bis 6 sind gleiche Teile mit den gleichen Bezugszeichen versehen.

Die in Fig. 3 dargestellte Ausführung stellt eine Variante der in Fig. 2 beschriebenen Zweitakt-Brennkraftmaschine dar. Dabei wird der Vordrall durch eine Steuereinrichtung 12, die eine Umlenkklappe 29 mit einer zur Zylinderachse 18 parallelen Achse 31 aufweist, erzeugt. An der der Zylinderbüchse 2 abgewandten Seite weist die Umlenkklappe 29 eine strömungsgünstige Anformung 30 auf. Durch Verdrehen dieser Steuereinrichtung 12 aus der strichliert dargestellten Lage werden durch die Anformung 30 ungleich große Teilströme a und b in den Frischladungsraum 3 geleitet, wodurch der für die jeweiligen Motorparameter optimale Vordrall, dargestellt durch die Pfeile 21, eingestellt werden kann.

Auf ähnliche Weise arbeitet die in Fig. 4 dargestellte Steuereinrichtung 12 in Form eines Umlenkschiebers 32, der ebenfalls eine strömungsgünstige Anformung 33 in Richtung der zuströmenden Frischladung aufweist und aus einer strichliert dargestellten unwirksamen Mittellage verschoben werden kann. Diese Ausführung weist zusätzlich zu ihrer konstruktiven Einfachheit den Vorteil auf, daß der Umlenkschieber 32 in jeder Lage die gleiche Drosselwirkung im Zuführkanal 11 aufweist und somit die Summe der Teilströme a und b gleich bleibt.

Die Fig. 5 zeigt die Aneinanderreihung zweier Zylinder 1', 1" mit einem gemeinsamen Frischladungsraum 3', wobei die Steuereinrichtungen 12 in den beiden Zuführkanälen 11 gleich aufgebaut sind wie jene des in Fig. 3 dargestellten Einzylindermotors. Die Zylindereinheiten mit den Zylinderbüchsen 2, 2' und den Steuereinrichtungen 12 sind spiegelgleich angeordnet, wodurch in den beiden Zylindern ein durch Pfeile 24, 24' angedeuteter gegenläufiger Grunddrall entsteht. Bei Betätigung der Steuereinrichtung 12 werden die beiden Umlenkklappen 29 in entgegengesetzter Richtung verschwenkt, sodaß ungleich große Teilströme a und b in den Frischladungsraum 3' einströmen und bezogen auf die Zylinderachsen 39, 40 ein durch die Pfeile 21, 21' angedeuteter gegenläufiger Vordrall entsteht. Es ist auch möglich, mehr als zwei Zylindereinheiten mit einem gemeinsamen Frischladungsraum auszustatten und den Vordrall in der beschriebenen Weise zu steuern.

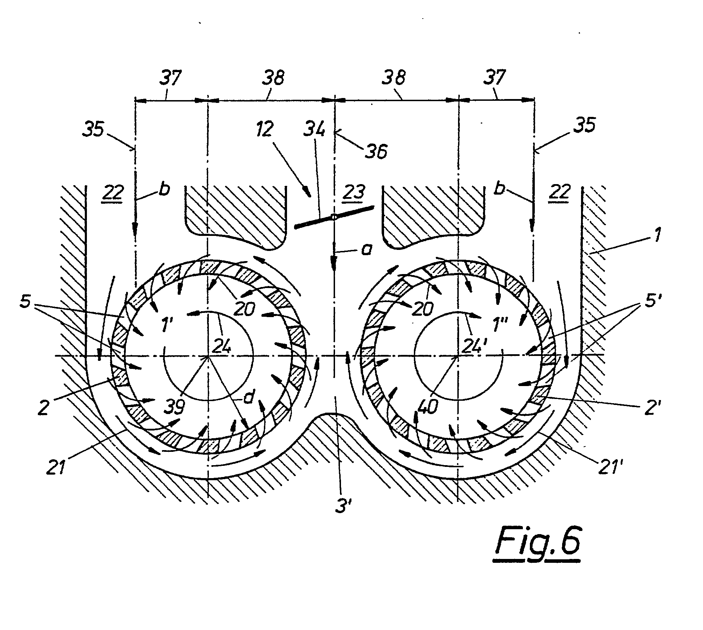

In Fig. 6 ist eine Zweizylinder-Zweitakt-Brennkraftmaschine dargestellt, deren beide Zylinder 1', 1" einen gemeinsamen alle Steuerschlitze 5, 5' der Zylinderbüchsen 2, 2' umfassenden Frischladungsraum 3' aufweisen. In den Frischladungsraum 3' münden zwei äußere Zuführkanäle 22, deren Achsen 35 zu den entsprechenden Zylinderachsen 39, 40 einen Normalabstand 37 aufweisen, der etwa dem halben Zylinderdurchmesser d entspricht. Der Normalabstand 38 der Achse 36 des mittleren Zuführkanals 23 von beiden Zylinderachsen 39, 40 ist dadurch gegeben, daß die Achse 36 den Abstand zwischen den beiden Zylinderachsen 39, 40 halbiert.

Der mittlere Zuführkanal 23 weist eine Drosseleinrichtung 34 auf, die bei Betätigung den Teilstrom a im Zuführkanal 23 gegenüber den Teilströmen b in den Zuführkanälen 22 vermindert, wodurch der Frischladung ein Vordrall entsprechend der Pfeile 21, 21' aufgeprägt wird, der bezogen auf die beiden Zylinderachsen 39 und 40 gegenläufig ist. Voraussetzung dabei sind Zylinderbüchsen 2 und 2', deren Einlaßschlitze 5, 5' einen gegenläufigen Grunddrall entsprechend der Pfeile 24, 24' erzeugen.

Demnach kann die Drallregelung auch bei Mehrzylinder Motoren bei Verwendung entsprechender Zylinderbüchsen verwendet werden, auch wenn für alle Zylinder ein gemeinsamer Frischladungsraum vorhanden ist.

Die außergewöhnliche Einfachheit der beschriebenen Steuereinrichtungen hat den Vorteil relativ geringer Herstellungskosten und hoher Betriebssicherheit.

## Patentansprüche

1. Zweitakt-Brennkraftmaschine mit Gleichstromspülung, mit mindestens einer Zylindereinheit mit vom Kolben (8) gesteuerten, am Zylinderumfang verteilten, einen Grunddrall erzeugenden Einlaßschlitzen (5), welche von einem den Zylinder (1', 1") umgebenden Frischladungsraum (3; 3') ausgehen, der über mindestens einen Zuführkanal (11; 22, 23) mit der Spülpumpe verbunden ist, wobei eine zwei Teilströme (a, b) bildende Steuereinrichtung (12) vorgesehen ist, welche sich im zylinderseitigen Ende (28) zumindest eines Zuführkanales (11; 22, 23) befindet und den Drall des durch die Einlaßschlitze (5) in den Zylinder (1', 1") eintretenden Frischladungsstromes abhängig von der Drehzahl und Last der Brennkraftmaschine beeinflußt, dadurch gekennzeichnet, daß die beiden Teilströme (a, b) im Querschnitt gesehen in Bezug auf den Zylinder in tangential entgegengesetzten Richtungen in den gemeinsamen Frischladungsraum (3; 3') münden, derart daß die Frischladung in dem den Zylinder (1', 1") umgebenden Frischladungsraum (3; 3') einen über die Steuereinrichtung (12) steuerbaren Vordrall aufweist.

2. Zweitakt-Brennkraftmaschine nach Anspruch 1, wobei die Achse des Zuführkanals die Zylinderachse zumindest annähernd schneidet, dadurch gekennzeichnet, daß jeder Zuführkanal (11) in zwei, in der Ebene der Einlaßschlitze (5) nebeneinanderliegende Teilkanäle (15, 16) unterteilt ist, die bei Betätigung der Steuereinrichtung (12) unterschiedlich große freie Querschnitte aufweisen.

3. Zweitakt-Brennkraftmaschine nach Anspruch 1 oder 2, dadurch gekennzeichnet, daß die Steuereinrichtung (12) eine den Zuführkanal (11) unterteilende, feststehende parallel zur Zylinderachse (18) angeordnete Trennwand (13), sowie eine steuerbare Drosselklappe (17) in mindestens einem der durch die Trennwand (13) gebildeten Teilkanäle (15, 16) aufweist (Fig. 2).

4. Zweitakt-Brennkraftmaschine nach Anspruch 1 oder 2, dadurch gekennzeichnet, daß die Steuereinrichtung (12) eine Umlenkklappe (29) mit einem vorzugsweise strömungsgünstigen Querschnitt aufweist und daß diese Umlenkklappe (29) beim Verschwenken um ihre Achse (31) in den beiden Teilkanälen (15, 16) unterschiedlich große Teilströme (a, b) hervorruft (Fig. 3).

5. Zweitakt-Brennkraftmaschine nach Anspruch 1 oder 2, dadurch gekennzeichnet, daß die Steuereinrichtung (12) einen Umlenkschieber (32) aufweist, dessen der Strömung zugewandte Seite eine strömungsgünstige Anformung (33) aufweist (Fig. 4).

6. Zweitakt-Brennkraftmaschine nach Anspruch 1, dadurch gekennzeichnet, daß die Achsen (35, 36) der mindestens zwei Zuführkanäle (22, 23), welche in der Ebene der Einlaßschlitze (5) in den Frischladungsraum (3') einmünden, einen Normalabstand (37, 38) in der Größenordnung des halben Zylinderdurchmessers (d) zur Zylinderachse (39, 40) aufweisen, wobei sich in mindestens einem Zuführkanal (32) eine Drosseleinrichtung (34) befindet, durch unterschiedlich große Teilströme (a, b) in den Zuführkanälen (22, 23) einstellbar sind (Fig. 6).

## Claims

1. A two-stroke internal combustion engine with uniflow scavenging, comprising one or more cylinder units with intake ports (5) controlled by the piston (8) and generating a basic torque, which are distributed along the circumference of the cylinder(s), and are coming from a fresh charge chamber (3; 3') surrounding the cylinder (1', 1"), which chamber is connected to the scavenge pump via one or more intake passages (11; 22, 23) provided with a control mechanism (12) producing two partial streams (a, b), which mechanism is placed on the end (28) of at least one intake passage (11; 22, 23) opening into the cylinder, and controls the torque of the flow of fresh charge entering the cylinder (1', 1") through the intake ports (5), depending on the speed and load of the engine, wherein - in a cross-sectional view of the cylinder - the two partial streams (a, b) enter the joint fresh charge chamber (3; 3') in tangentially opposite directions, such that the fresh charge in the chamber (3; 3') around the cylinder (1', 1") is given a pre-torque controlled by the control mechanism (12).

2. A two-stroke internal combustion engine according to claim 1, in which the axis of the intake passage intersects the cylinder axis at least approximately, wherein each intake passage (11) is divided into two partial passages (15, 16), which are situated side by side in the plane of the intake ports (5), and which have free cross-sections differing in size upon actuation of the control mechanism (12).

3. A two-stroke internal combustion engine according to claim 1 or 2, wherein the control mechanism (12) is provided with a rigid partition (13) located parallel to the cylinder axis (18) and dividing the intake passage (11), and with an adjustable throttle valve (17) in at least one of the partial passages (15, 16) formed by the partition (13). (Fig. 2).

4. A two-stroke internal combustion engine according to claim 1 or 2, wherein the control mechanism (12) is provided with a deflector flap (29), preferably of a streamlined cross-section, and wherein the said deflector flap (29) will produce partial streams (a, b) of different volumes in the two partial passages (15, 16) upon being rotated on its axis (31). (Fig. 3).

5. A two-stroke internal combustion engine according to claim 1 or 2, wherein the control mechanism (12) is provided with a deflector slide (32) whose side facing the flow has a streamlined nose (33). (Fig. 4).

6. A two-stroke internal combustion engine according to claim 1, wherein the axes (35, 36) of the two or more intake passages (22, 23) opening into the fresh charge chamber (3') in the plane of the intake ports (5) should be at a normal distance (37, 38) from the cylinder axis (39, 40) of approximately half the cylinder diameter (d), with a throttling device (34) in at least one of the intake passages (22), by means of which different volumes of the individual streams (a, b) may be obtained in these passages (22, 23). (Fig. 6).

**Revendications**

1. Moteur à combustion interne à deux temps avec balayage en courant continu, comportant au moins une unité de cylindre pourvu de fenêtres d'entrée (5), commandées par le piston (8), réparties sur le pourtour du cylindre, créant un tourbillonnement, et qui partent d'une chambre de charge fraîche (3, 3') entourant le cylindre (1', 1") et reliée par au moins un canal d'amenée (II, 22, 23) à la pompe de balayage, un dispositif de commande (12) formant deux courants partiels (a, b) étant prévu, qui se trouve à l'extrémité côté cylindre (28) au moins d'un canal d'amenée (II, 22, 23) et qui influence le tourbillonnement du courant de charge fraîche pénétrant par les fentes d'entrée (5) dans le cylindre (1', 1") en fonction de la vitesse de rotation et de la charge du moteur à combustion interne, caractérisé en ce les deux courants partiels (a, b) débouchent dans la chambre de charge fraîche commune (3, 3'), vu en coupe par rapport au cylindre dans des sens tangentiellement opposés, de sorte que la charge fraîche présente dans la chambre de charge fraîche (3, 3') entourant le cylindre (1', 1") un prétourbillonnement ajustable avec le dispositif de commande (12).

2. Moteur à combustion interne à deux temps selon la revendication 1 dans lequel l'axe du canal d'amenée coupe, au moins approximativement l'axe du cylindre, caractérisé en ce chaque canal d'amenée (11) est divisé en deux canaux partiels (15, 16) situés l'un à côté de l'autre dans le plan des fentes d'entrée (5) et qui présentent des sections transversales libres de grandeurs inégales lorsqu'on actionne le dispositif de commande (12).

3. Moteur à combustion interne à deux temps selon la revendication 1 ou 2, caractérisé en ce que le dispositif de commande (12) comporte une cloison de séparation (13) fixe parallèle à l'axe du cylindre (19) divisant le canal d'amenée (11) ainsi qu'un clapet d'étranglement (17) pouvant être commandé, dans l'un au moins des canaux partiels (15, 16) formés par la cloison de séparation (13) (Figure 2).

4. Moteur à combustion interne à deux temps selon la revendication 1 ou 2, caractérisé en ce que le dispositif de commande (12) comporte un clapet de déviation (29) qui présente une section transversale de préférence favorisant l'écoulement du courant et en ce que ce clapet de déviation (29) en pivotement sur son axe (31) engendre dans les deux canaux partiels (15, 16) des courants partiels (a, b) de grandeurs inégales. (Figure 3).

5. Moteur à combustion interne à deux temps selon la revendication 1 ou 2, caractérisé en ce que le dispositif de commande (12) comporte un coulisseau déflecteur (32), dont la face tournée vers le courant présente une conformation (33) favorisant l'écoulement du courant. (Figure 4).

6. Moteur à combustion interne à deux temps selon la revendication 1, caractérisé en ce que les axes (35, 36) des deux, au moins, canaux d'amenée (22, 23) qui débouchent dans la chambre de charge fraîche (3') dans le plan des fentes d'entrée (5) présentent une distance normale (37, 38) de l'ordre de grandeur du demi diamètre (d) du cylindre par rapport à l'axe (39, 40) du cylindre, tandis que, dans au moins un canal d'amenée (23); se trouve un dispositif d'étranglement (34), grâce auquel des courants partiels (a, b) de grandeurs inégales peuvent être ajustés dans les canaux d'amenée (22, 23). (Figure 6).

*Fig.1*

*Fig.2*

Fig. 3

Fig. 4

Fig. 5

_Fig.6_